# EUROPÄISCHE PATENTANMELDUNG

(11) **EP 2 796 870 A1**
(43) Veröffentlichungstag der Anmeldung: **29.10.2014**
(21) Anmeldenummer: 13165148.1
(22) Anmeldetag: 24.04.2013
(51) Int. Cl.: G01N 29/07, G01B 17/02, G01N 29/11, G01N 17/00

(54) **Verfahren zur Bestimmung der Dicke von Ablagerungen**

(71) Anmelder: BASF SE, 67056 Ludwigshafen (DE)
(72) Erfinder: Die Erfindernennung liegt noch nicht vor
(74) Vertreter: Rippel, Hans Christoph

(57) **Zusammenfassung**

Die Erfindung betrifft ein Verfahren zur Bestimmung der Dicke von Ablagerungen (25) im Gasraum (15) in einem Behälter (9), folgende Schritte umfassend:
(a) Senden eines Ultraschallsignals (19; 27) von einem Sender (21) in den Gasraum (25) des Behälters (9),
(b) Empfangen des durch den Gasraum (15) des Behälters (9) gelaufenen Ultraschallsignals (19; 27) mit einem Empfänger (23),
(c) Bestimmung der Dicke der Ablagerungen (25) im Behälter (9) aus der Laufzeit und/oder Stärke des empfangenen Ultraschallsignals (19; 27).

## Beschreibung

Die Erfindung betrifft ein Verfahren zur Bestimmung der Dicke von Ablagerungen im Gasraum in einem Behälter.

Derartige Behälter können zum Beispiel Behälter zur Phasentrennung sein, in denen ein zweiphasiges Gemisch in einen flüssigen Teil und einen Gasstrom getrennt wird. Solche Behälter werden zum Beispiel bei der Herstellung von Polymeren, insbesondere Polyamiden eingesetzt. Dem Behälter wird ein zweiphasiges, Präpolymere enthaltendes Gemisch zugeführt, und im Behälter wird dieses in einen Präpolymeren-Strom, der im Sumpf des Behälters abgezogen wird und einen Dampfstrom, der am Kopf des Behälters abgezogen wird, getrennt. Im Gasraum des Behälters bilden sich Beläge. Diese können sich von der Behälterwand lösen und in den mit Flüssigkeit gefüllten Teil des Behälters fallen. Dort stören die abgefallenen Beläge die Polymerisation. Um die Störung der Polymerisation im Behälter zu vermeiden, wird das Verfahren regelmäßig unterbrochen und der Behälter gereinigt. Die Unterbrechung des Prozesses erfolgt präventiv aufgrund der Betriebserfahrung, jedoch ohne jeden objektiven Anhaltspunkt für den richtigen Zeitpunkt. Durch die Abstellung und Reinigung wird die Produktionskapazität der Anlage vermindert, und die Reinigung erfordert zusätzlichen Aufwand. Ein entsprechendes Verfahren zur Herstellung von Polyamiden ist beispielsweise in EP 0 129 195 A2 beschrieben.

Um den Prozess so selten wie möglich zu unterbrechen, um den Behälter zu reinigen, wäre es wünschenswert, wenn die Dicke der Ablagerungen bestimmt werden könnte, um nur bei Bedarf, nämlich wenn eine solche der Dicke der Ablagerungen erreicht ist, dass die Gefahr der Ablösung besteht, den Prozess zu unterbrechen und den Behälter zu reinigen.

Zur Bestimmung von Ablagerungen in Rohrleitungen ist es beispielsweise aus DE 102 14 678 B4 bekannt, mittels Ultraschall-Impulsen durch die Wandung eines Behälters oder einer Rohrleitung die Stärke eines Belages zu bestimmen. Das dort beschriebene Verfahren eignet sich jedoch lediglich für flüssigkeitsgefüllte Behälter oder Rohrleitungen und nicht für die Bestimmung von Ablagerungen in Gasräumen von Behältern. Ein entsprechendes Verfahren zur Bestimmung von Ablagerungen in einem flüssigkeitsgefüllten Behälter oder einer flüssigkeitsgefüllten Rohrleitung ist auch aus WO 2009/141135 A1 bekannt.

Nachteil beider beschriebener Verfahren ist, dass lediglich die Dicke von Belägen in flüssigkeitsgefüllten Behältern bzw. Rohrleitungen gemessen werden kann.

Aufgabe der vorliegenden Erfindung ist es daher, ein Verfahren bereitzustellen, das es ermöglicht, im Gasraum eines Behälters die Dicke von Belägen zu bestimmen, um so die Intervalle, zu denen eine Prozessabschaltung für Reinigungszwecke erfolgt, zu maximieren.

Gelöst wird die Aufgabe durch ein Verfahren zur Bestimmung der Dicke von Ablagerungen im Gasraum in einem Behälter, das folgende Schritte umfasst:
(a) Senden eines Ultraschallsignals von einem Sender in den Gasraum des Behälters,
(b) Empfangen des durch den Gasraum des Behälters gelaufenen Ultraschallsignals mit einem Empfänger,
(c) Bestimmung der Dicke der Ablagerungen im Behälter aus der Laufzeit und/oder Stärke des empfangenen Ultraschallsignals.

Überraschenderweise hat sich gezeigt, dass die Bestimmung von Dicken von Belägen auch im Gasraum eines Behälters möglich ist. Zur Messung können beliebige Ultraschallsensoren eingesetzt werden, die ein ausreichend starkes Signal liefern, so dass ein detektierbarer Anteil des Signals durch Behälterwandung und Belag in den Gasraum gelangt und dessen reflektiertes Echo von einem Empfänger empfangen werden kann. Zum Senden des Signals kann ein Ultraschallsensor auf bekannte Weise an die Behälteraußenwand gekoppelt werden. Hierzu ist es zum Beispiel möglich, den Ultraschallsensor auf der Behälterwand außen mit seiner Membran aufzusetzen. Um eine gute Schallübertragung zu erhalten, wird bevorzugt ein Koppelmedium aufgetragen. Mit diesem werden mögliche Unebenheiten zwischen Behälterwandung und Sensoroberfläche ausgeglichen. Geeignete Koppelmedien sind dem Fachmann bekannt.

Alternativ zum Aufsetzen eines Ultraschallsensors auf die Außenwandung des Behälters ist es auch möglich, eine an die Form des Ultraschallsensors angepasste Öffnung in der Behälterwandung auszubilden und den Ultraschallsensor in die Behälterwand einzusetzen. Dies hat den Vorteil, dass das Signal nicht zunächst die Behälterwandung passieren muss, sondern im Bereich des Sensors die Behälterinnenwand von der Membran des Ultraschallsensors gebildet wird.

In einer ersten Ausführungsform der Erfindung werden zum Senden des Ultraschallsignals ein Sender und zum Empfangen des reflektierten Signals ein Empfänger eingesetzt, wobei Sender und Empfänger zwei separate Bauteile sind. Dies ermöglicht es, Sender und Empfänger an unterschiedlichen Positionen an der Behälterwand zu positionieren. So ist es zum Beispiel möglich, Sender und Empfänger gegenüberliegend an der Behälterwandung anzubringen, so dass das Ultraschallsignal auf der einen Seite vom Sender gesendet wird, durch Behälterwandung und gegebenenfalls vorhandene Ablagerungen durch den Behälter und auf der anderen Seite durch gegebenenfalls vorhandene Ablagerungen und die Behälterwandung an den Empfänger gelangt. Alternativ ist es jedoch zum Beispiel auch möglich, den Sender und den Empfänger beispielsweise mit einem Winkel zur radialen Richtung an der Behälterwandung anzubringen, so dass das Signal mindestens einmal an einer Stelle der Behälterwand reflektiert wird, bevor dieses den Empfänger erreicht. Hierbei sollten Sender und Empfänger immer so ausgerichtet sein, dass das vom Sender gesendete und an den Ablagerungen bzw. Behälterwandung reflektierte Signal auch an den Empfänger gelangt. Neben einer Ausrichtung mit nur einer Reflektion des Signals an der Behälterwand ist es auch möglich, Sender und Empfänger so auszurichten, dass das Signal mehrere Male an der Behälterinnenwand reflektiert wird, bevor es den Empfänger erreicht.

Alternativ zu der Bauart mit getrenntem Sender und Empfänger ist es auch möglich, einen Ultraschallsensor einzusetzen, der als Sender und Empfänger arbeitet. In diesem Fall wird zunächst vom Ultraschallsensor ein Ultraschallsignal gesendet, die Schwingung des Sensors gedämpft und anschließend kann dann ein reflektiertes Signal empfangen werden. Wenn der Ultraschallsensor als Sender und Empfänger arbeitet, ist es immer zwingend erforderlich, dass das Signal mindestens einmal im Behälter an der Behälterwand reflektiert wird. Üblicherweise wird der Ultraschallsensor in diesem Fall so positioniert, dass das Signal durch den Behälter gesendet wird, an der gegenüberliegenden Behälterwand reflektiert und wieder zum Ultraschallsensor zurückläuft. Wenn der Ultraschallsensor als Sender und Empfänger arbeitet, ist es weiterhin notwendig, dass die Abmessungen des Behälters so groß sind, dass die Zeit zwischen dem Senden des Signals und dem Empfangen des Echos ausreichend lang bemessen ist, dass der Sensor ausschwingen kann, um das empfangene Signal unverfälscht zu empfangen. Bei einer Abmessung des Behälters, die für eine entsprechende Laufzeit des Signals nicht ausreichend wäre, ist es alternativ auch möglich, den Ultraschallsensor so auszurichten, dass das Signal mehr als einmal an der Behälterwandung reflektiert wird, bevor das reflektierte Ultraschallsignal vom Ultraschallsensor empfangen wird. Alternativ ist es möglich für den Fall einer Abmessung des Behälters, die nicht ausreichend ist, um ein Ausschwingen des Ultraschallsensors zu ermöglichen, einen Sender und einen Empfänger vorzusehen, die nebeneinander positioniert werden, so dass das Signal vom Sender gesendet und vom Empfänger empfangen wird.

Bei einer Anordnung von Sender und Empfänger derart, dass das Signal mindestens einmal reflektiert wird, lässt sich die Dicke der Ablagerungen durch die Änderung der Laufzeit ermitteln. Durch die Ablagerung wird die Strecke, die das Ultraschallsignal vom Sender zum Empfänger zurücklegt, verkürzt. Aufgrund der kürzeren Laufzeit lässt sich damit auf die Dicke der Ablagerungen schließen.

Wenn Sender und Empfänger so angeordnet sind, dass das Signal nicht mindestens einmal an der Behälterwand reflektiert wird, lässt sich auf die Dicke der Ablagerungen zum Beispiel durch Abschwächung des Signals schließen.

Um aussagekräftige Werte zu erhalten, ist es vorteilhaft, die Ultraschallsensoren zu kalibrieren und beispielsweise eine Messkurve zu bestimmen. Anhand der Messkurve können somit jeweils bestimmte Laufzeiten bei mindestens einmal reflektiertem Signal oder bestimmte Signalstärken bei nicht reflektiertem Signal Dicken der Ablagerung zugeordnet werden. Durch Vergleich des gemessenen Signals mit dem entsprechenden Signal, das beispielsweise in einer Matrix hinterlegt sein kann, lässt sich dann die aktuelle Dicke der Ablagerungen im Gasraum des Behälters bestimmen.

Ein Behälter, in dessen Gasraum sich Ablagerungen bilden können, ist zum Beispiel ein Trennbehälter bei der Herstellung von Polyamiden. Dem Trennbehälter wird beim Herstellverfahren des Polyamids ein zu trennender zweiphasiger Präpolymerstrom zugeführt. Der zweiphasige Präpolymerstrom enthält eine Flüssigphase, die die Präpolymere enthält und eine Dampfphase. Im Bereich der Dampfphase, d.h. dem Gasraum des Trennbehälters, bilden sich Ablagerungen an der Behälterwand. Mit zunehmender Dicke der Ablagerungen werden diese instabil und können sich von der Behälterwand lösen. Die Ablagerungen fallen dann in den mit Flüssigkeit gefüllten Teil des Behälters und können in diesem Bereich die dort stattfindende Polymerisation stören. Um eine solche Störung zu vermeiden, ist es derzeit üblich, den Prozess vorsorglich regelmäßig zu unterbrechen und den Behälter zu reinigen. Diese Abstellung erfolgt derzeit präventiv aufgrund der Betriebserfahrung ohne objektiven Anhaltspunkt für den richtigen Zeitpunkt. Abstellung und Reinigung vermindern die Produktionskapazität der Anlage und erfordern einen Aufwand an sich. Durch die erfindungsgemäße Bestimmung der Dicke von Ablagerungen im Gasraum eines Behälters ist es möglich, den Prozess jeweils nur dann zu unterbrechen, wenn eine Reinigung aufgrund der Dicke der gebildeten Ablagerungen notwendig ist, so dass die Abschaltzeiten optimiert werden können und die Anlage zur Herstellung des Polyamids nur dann abgeschaltet werden braucht, wenn tatsächlich eine Reinigung erforderlich ist.

Polyamide, zu deren Herstellung ein Trennbehälter eingesetzt wird, in dem ein zweiphasiger Präpolymeren-Strom getrennt wird, sind insbesondere Polyamide des Typs AA/BB sowie Copolymere dieser Polyamide mit weiteren Monomeren.

Polyamide des Typs AA/BB werden üblicherweise aus wässrigen Lösungen von Salzen aus α,ω-Alkandicarbonsäuren mit 6 bis 12 Kohlenstoffatomen und α,ω-Alkandiaminen mit 4 bis 12 Kohlenstoffatomen, insbesondere solcher mit gerader Kohlenstoffkette, hergestellt. Geeignete Dicarbonsäuren sind beispielsweise Acelainsäure, Adipinsäure, Korksäure, Sebazinsäure, Decandicarbonsäure, Terephthalsäure oder Naphthalindicarbonsäure. Bevorzugte α,ω-Alkandicarbonsäuren haben 6 bis 10 Kohlenstoffatome.

Geeignete Diamine sind beispielsweise Hexamethylendiamin, Octamethylendiamin, Nonamethylendiamin oder Decamethylendiamin, Bis(4-aminocyclohexyl)methan, Bis(4-amino-3-methylcyclohexyl)methan, Bis(4-aminocyclohexyl)propan-2,2. Die bevorzugten α,ω-Alkandiamine haben 6 bis 10 Kohlenstoffatome.

Zur Herstellung des Polyamids wird die wässrige Lösung von Salzen aus α,ω-Alkandicarbonsäure und α,ω-Alkandiamin mit einer Temperatur von 50 bis 100 °C kontinuierlich in eine Verdampferzone eingeleitet. Dort wird die Lösung unter gleichzeitiger Verdampfung von Wasser und Bildung eines Präpolymeren unter einem Überdruck von 1 bis 10 bar auf eine Temperatur von 250 bis 300 °C erhitzt. Besonders bevorzugt ist es, wenn die Verweilzeit in der Verdampferzone maximal 60 Sekunden beträgt. Die Verdampferzone wird vorzugsweise in Form eines Rohrbündels ausgebildet. An die Verdampferzone kann sich eine Stoffaustauschzone anschließen. Als Stoffaustauschzone eignet sich insbesondere eine Kolonne mit Einbauten, beispielsweise eine Füllkörperkolonne. Durch die Füllkörper werden die in der Verdampferzone erhaltenen Phasen, d.h. Präpolymeres und Dampf, innig in Berührung gebracht.

An die Verdampferzone bzw. die Stoffaustauschzone schließt sich der Trennbehälter an, in dem das zweiphasige Präpolymerengemisch in eine flüssige, Präpolymere enthaltende Phase und die Dampfphase getrennt wird. Die Dampfphase enthält üblicherweise Wasserdampf und Diamine, die beim Verdampfen des Wassers freigesetzt wurden. Der die Dampfphase bildende Brüden wird aus dem Trennbehälter abgezogen und in Wasser und Diamine getrennt. Insbesondere die in der Dampfphase enthaltenen Diamine können an der Innenwand des Trennbehälters ausfallen und so die Ablagerungen bilden.

Die Präpolymere der Flüssigphase polymerisieren im Trennbehälter weiter zum Polyamid.

Polyamide, die auf diese Weise hergestellt werden können, sind beispielsweise PA46, PA66, PA69, PA610, PA612, PA613, PA1212, PA1313, PA6T, PA9T, PA MCD6, PA6I, PA6-3-T, PA/6T, PA6/66, PA6/12, PA66/6/610, PA6I/6T, PA6I/6T/MACM, PA6T/6I/MXD/T, PA6I/6T/IPDA, PA6I/6T/MXD, PA6I/6T/8T/8I, PA6I/6T/10T/10I, PA6I/6t/12T/12I, PA6I/6T/610, PA PACM 12, PA6I/6T/PACM, PA12/MACMI, PA12/MACMT 6T und PA PDA-T.

Ausführungsbeispiele der Erfindung sind in den Figuren dargestellt und werden in der nachfolgenden Beschreibung näher erläutert.

Es zeigen:
- Figur 1: ein Fließdiagramm eines Verfahrens zur Herstellung von Polyamiden,
- Figur 2: eine mögliche Anordnung von Sender und Empfänger in einer ersten Ausführungsform,
- Figur 3: eine mögliche Anordnung von Sender und Empfänger in einer zweiten Ausführungsform.

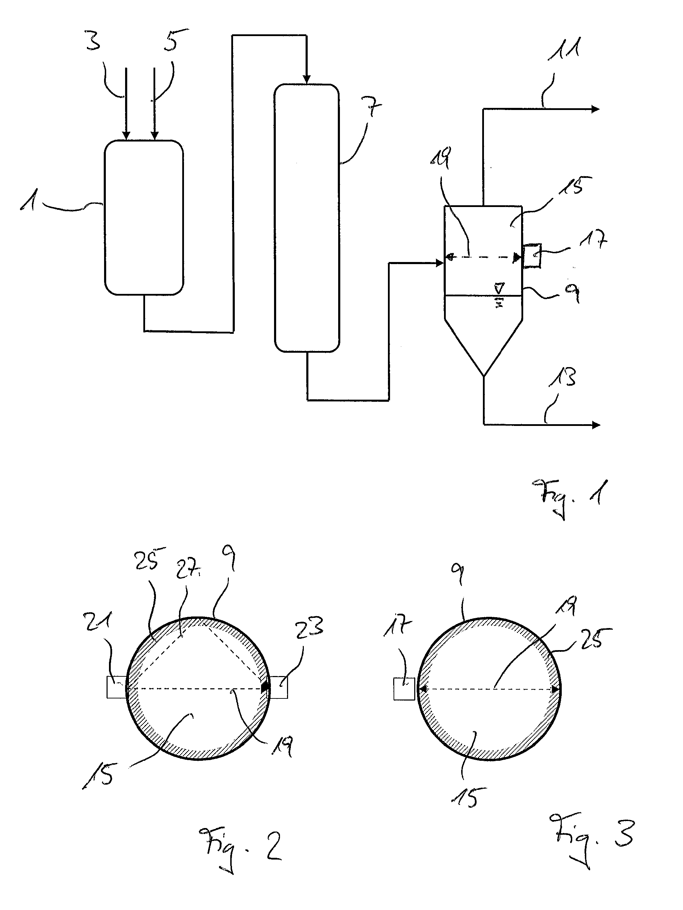

In Figur 1 ist ein Fließdiagramm eines Verfahrens zur Herstellung von Polyamiden dargestellt.

Zur Herstellung von Polyamiden werden einem Vorlagebehälter 1 über einen ersten Zulauf das zur Herstellung des Polyamids eingesetzte Diamin und über einen zweiten Zulauf 5 die zur Herstellung des Polyamids eingesetzte Dicarbonsäure zugeführt. Im Vorlagebehälter 1 werden Diamin und Dicarbonsäure miteinander vermischt. Neben der zur Herstellung des Polyamids notwendigen Dicarbonsäure und dem Diamid wird dem Vorlagebehälter 1 auch Wasser zugeführt.

Die im Vorlagebehälter 1 erzeugte Mischung wird einem Verdampfer 7 zugeführt. Der Verdampfer 7 ist dabei vorzugsweise als Rohrbündelapparat ausgeführt. Im Verdampfer 7 wird die zugeführte Mischung erhitzt. Hierbei wird das Wasser verdampft und es bildet sich ein Präpolymer, das unter fortschreitender Polykondensation den Verdampfer 7 passiert. Hierdurch entsteht im Verdampfer 7 ein zweiphasiger Präpolymeren-Strom. Der zweiphasige Präpolymeren-Strom wird einem Trennbehälter 9 zugeführt. Im Trennbehälter 9 wird der zweiphasige Präpolymeren-Strom in eine Dampfphase und eine Flüssigphase getrennt. In der Flüssigphase wird die Polymerisation zum Polyamid fortgesetzt.

Die Dampfphase wird über einen Dampfabzug 11 aus dem Trennbehälter 9 abgezogen. Die über den Dampfabzug 11 abgezogene Dampfphase enthält neben dem verdampften Wasser auch noch gasförmiges Diamin. Die Dampfphase wird daher vorzugsweise einer Aufarbeitung zugeführt, in der Wasser und Diamin getrennt werden. Hierzu kann zum Beispiel eine Rektifikationskolonne eingesetzt werden. Das abgetrennte Diamin kann dann in die Reaktion zurückgeführt werden und das Wasser als Abwasser aus dem Prozess abgeführt werden.

Am Sumpf des Trennbehälters 9 wird über einen Flüssigkeitsabzug 13 die das Polyamid enthaltende flüssige Phase entnommen. Diese Phase wird üblicherweise einem Entgasungsextruder zudosiert, in dem das restliche Wasser entfernt wird. Die im Entgasungsextruder entgaste Schmelze wird üblicherweise zu Strängen gepresst und granuliert.

Da die dem Trennbehälter 9 zugeführte Gasphase neben Wasser auch Diamin enthält, bilden sich an der Wandung des Trennbehälters 9 Ablagerungen aus. Bei Übersteigen einer bestimmten Dicke können sich die Ablagerungen von der Behälterwand lösen und in die Flüssigphase fallen, wodurch die Reaktion zum Polymeren im Trennbehälter 9 gestört wird. Aus diesem Grund ist es notwendig, die Ablagerungen aus dem Trennbehälter 9 regelmäßig zu entfernen.

Um den Betrieb gezielt unterbrechen zu können und jeweils zum optimalen Zeitpunkt die Ablagerungen zu entfernen, wird erfindungsgemäß die Dicke der Ablagerungen im Gasraum 15 des Trennbehälters 9 bestimmt. Hierzu wird mit einem Ultraschallsensor 17 ein Ultraschallsignal 19 durch mögliche Ablagerungen in den Gasraum 15 des Behälters gesendet. In der in Figur 1 dargestellten Ausführungsform wird das Ultraschallsignal 19 an der dem Ultraschallsensor 17 gegenüberliegenden Wandung reflektiert, so dass ein Echo des Ultraschallsignals 19 zurück zum Ultraschallsensor 17 gelangt. Das reflektierte Signal wird vom nun als Empfänger arbeitenden Ultraschallsensor 17 empfangen. Aus der Laufzeit des Ultraschallsignals und/oder der Stärke bzw. Frequenz des Ultraschallsignals 19 kann dann auf die Dicke der Ablagerungen im Gasraum 15 des Trennbehälters 9 geschlossen werden.

Eine mögliche Anordnung von Sender und Empfänger zur Bestimmung der Dicke von Ablagerungen ist beispielhaft in einer ersten Ausführungsform in Figur 2 dargestellt.

Bei der in Figur 2 dargestellten Ausführungsform werden ein Sender 21 und ein vom Sender 21 getrennter Empfänger 23 eingesetzt. In der in Figur 2 dargestellten Ausführungsform liegen der Sender 21 und der Empfänger 23 auf gegenüberliegenden Seiten des Behälters 9.

In Figur 2 sind Ablagerungen 25 schematisch durch eine Schraffur dargestellt.

Zur Messung der Dicke der Ablagerungen 25 ist es mit der in Figur 2 dargestellten Ausführungsform zum einen möglich, mit dem Sender 21 ein Signal in den Gasraum 15 des Behälters zu senden, wobei das Signal die Ablagerungen 25 passiert. Auf der dem Sender 21 gegenüberliegenden Seite passiert das Ultraschallsignal 19 erneut die Ablagerungen und gelangt zum Empfänger 23. Aus der Frequenz und der Stärke des Ultraschallsignals 19, das vom Empfänger 23 empfangen wurde, kann nun auf die Dicke der Ablagerungen 25 geschlossen werden.

Alternativ ist es auch möglich, den Sensor 21 so zu positionieren, dass das Signal nicht direkt zum Empfänger 23 geleitet wird, sondern mindestens einmal an der Behälterwand reflektiert wird. Dies ist schematisch ebenfalls in Figur 2 dargestellt und mit Bezugszeichen 27 bezeichnet. In diesem Fall ist es notwendig, den Empfänger 23 so zu positionieren, dass das an der Behälterwandung reflektierte Signal 27 auch sicher den Empfänger 23 erreicht. Das reflektierte Signal 27 wird zum einen an der Behälterwand, zum anderen aber auch an den Ablagerungen reflektiert. Durch die Reflektion an den Ablagerungen kürzt sich die Strecke, die vom reflektierten Ultraschallsignal 27 zurückgelegt wird, so dass aus der Laufzeit des reflektierten Ultraschallsignals 27 auf die Dicke der Ablagerungen 25 geschlossen werden kann. Zusätzlich lassen sich auch die Stärke des empfangenen Signals und die Frequenz des empfangenen Signals heranziehen, um auf die Dicke der Ablagerungen 25 zu schließen.

In Figur 3 ist beispielhaft eine zweite Ausführungsform für eine mögliche Anordnung für Sender und Empfänger dargestellt.

In der in Figur 3 dargestellten Ausführungsform wird ein Ultraschallsensor 17 genutzt, der sowohl als Sender als auch als Empfänger arbeiten kann. In diesem Fall arbeitet der Ultraschallsensor 27 zunächst als Sender und sendet ein Ultraschallsignal 19 aus. Nach dem Senden des Ultraschallsignals 19 wird die Schwingung des Ultraschallsensors 17 gedämpft und zum Stillstand gebracht. Nun kann der Ultraschallsensor 17 als Empfänger arbeiten und eingehende Ultraschallsignale empfangen. Zur Bestimmung der Dicke von Ablagerungen wird ein Ultraschallsignal 19 in den Gasraum 15 des Behälters gesendet, dieses Signal wird an der dem Ultraschallsensor 17 gegenüberliegenden Wandung bzw. an den Ablagerungen auf der dem Ultraschallsensor 17 gegenüberliegenden Wandung reflektiert, so dass ein Echo des gesendeten Ultraschallsignals zurück zum Ultraschallsensor 17 gelangt. Durch die Reflektion des Ultraschallsignals an den Ablagerungen 25 verkürzt sich in Abhängigkeit von der Dicke der Ablagerungen die Laufzeit des Ultraschallsignals, so dass aus der Laufzeit des Ultraschallsignals auf die Dicke der Ablagerungen geschlossen werden kann. Zusätzlich ist es - wie auch bei der getrennten Positionierung von Sender und Empfänger - möglich, sowohl Stärke des empfangenen Ultraschallsignals als auch dessen Frequenz zu nutzen, um auf die Dicke der Ablagerungen 25 zu schließen.

Neben der Ausführungsform mit einem Ultraschallsensor 17, der sowohl als Sender als auch als Empfänger arbeitet, ist es alternativ auch möglich, bei der in Figur 3 dargestellten Anordnung einen Sender und einen vom Sender getrennten Empfänger zu nutzen und diese unmittelbar nebeneinander oder übereinander zu positionieren.

**Bezugszeichenliste**

| | |
|---|---|
| 1 | Vorlagebehälter |
| 3 | erster Zulauf |
| 5 | zweiter Zulauf |
| 7 | Verdampfer |
| 9 | Trennbehälter |
| 11 | Dampfabzug |
| 13 | Flüssigkeitsabzug |
| 15 | Gasraum |
| 17 | Ultraschallsensor |
| 19 | Ultraschallsignal |
| 21 | Sender |
| 23 | Empfänger |
| 25 | Ablagerungen |
| 27 | reflektiertes Signal |

## Patentansprüche

1. Verfahren zur Bestimmung der Dicke von Ablagerungen (25) im Gasraum (15) in einem Behälter (9), folgende Schritte umfassend:
(a) Senden eines Ultraschallsignals (19; 27) von einem Sender (21) in den Gasraum (25) des Behälters (9),
(b) Empfangen des durch den Gasraum (15) des Behälters (9) gelaufenen Ultraschallsignals (19; 27) mit einem Empfänger (23),
(c) Bestimmung der Dicke der Ablagerungen (25) im Behälter (9) aus der Laufzeit und/oder Stärke des empfangenen Ultraschallsignals (19; 27).

2. Verfahren gemäß Anspruch 1, **dadurch gekennzeichnet, dass** der Sender (21) und der Empfänger (23) an unterschiedlichen Positionen am Behälter (9) positioniert sind.

3. Verfahren gemäß Anspruch 1, **dadurch gekennzeichnet, dass** zum Senden und Empfangen des Ultraschallsignals (19) ein Ultraschallsensor (17) genutzt wird, der als Sender und Empfänger arbeitet.

4. Verfahren gemäß einem der Ansprüche 1 bis 3, **dadurch gekennzeichnet, dass** der Sender (21) und der Empfänger (23) so positioniert sind, dass das Ultraschallsignal (19; 27) mindestens einmal im Gasraum (15) des Behälters (9) reflektiert wird und vom Empfänger (23) ein Echo des reflektierten Signals (19; 27) empfangen wird.

5. Verfahren gemäß einem der Ansprüche 1 bis 4, **dadurch gekennzeichnet, dass** der Sender (21) und der Empfänger (23) außen auf die Behälterwand aufgesetzt sind.

6. Verfahren gemäß einem der Ansprüche 1 bis 4, **dadurch gekennzeichnet, dass** in der Behälterwand Öffnungen ausgebildet sind, in die der Sender (21) und der Empfänger (23) eingesetzt werden, so dass im Bereich des Senders (21) und des Empfängers (23) die Behälterinnenwand durch eine Membran des Senders (21) beziehungsweise des Empfängers (23) gebildet wird.

7. Verfahren gemäß einem der Ansprüche 1 bis 6, **dadurch gekennzeichnet, dass** der Behälter ein Trennbehälter (9) ist, der bei der Herstellung von Polyamiden eingesetzt wird, wobei dem Trennbehälter (9) ein zweiphasiger Präpolymeren-Strom zugeführt wird.

8. Verfahren gemäß Anspruch 7, **dadurch gekennzeichnet, dass** im Trennbehälter (9) eine Flüssigphase und eine Gasphase enthalten sind und der Sender (21) und der Empfänger (23) oberhalb der Flüssigphase positioniert sind.
